# EUROPÄISCHE PATENTSCHRIFT

(11) **EP 1 018 264 B1**
(45) Veröffentlichungstag und Bekanntmachung des Hinweises auf die Patenterteilung: **13.08.2003**
(21) Anmeldenummer: 98954145.3
(22) Anmeldetag: 08.09.1998
(51) Int. Cl.: H04N 5/45

(54) **VERFAHREN UND VORRICHTUNG ZUR ERZEUGUNG VON RAHMEN UM VIDEOBILDER**
METHOD AND DEVICE FOR PRODUCING FRAMES AROUND VIDEO IMAGES
PROCEDE ET DISPOSITIF POUR LA PRODUCTION DE CADRES AUTOUR D'IMAGES VIDEO

(30) Priorität: 26.09.1997 DE 19742601
(43) Veröffentlichungstag der Anmeldung: 12.07.2000
(73) Patentinhaber: Micronas Munich GmbH, 81541 München (DE)
(72) Erfinder: BRETT, Maik, D-65719 Hofheim a. Ts. (DE); BURKERT, Matthias, D-80689 München (DE)
(74) Vertreter: Patentanwälte Westphal, Mussgnug & Partner
(86) Internationale Anmeldenummer: DE9802649
(87) Internationale Veröffentlichungsnummer: WO99017545

(56) Entgegenhaltungen:
- EP-A- 0 539 953
- WO-A-97/24869
- US-A- 4 238 773
- US-A- 4 616 262
- US-A- 5 590 267

## Beschreibung

Die vorliegende Erfindung betrifft ein Verfahren zur Erzeugung eines Rahmens um ein Videobild sowie eine Vorrichtung zur Erzeugung eines Rahmens um ein matrixförmig aufgebautes Videobild, die insbesondere zur Durchführung des Verfahrens geeignet ist.

Es gibt verschiedene Anwendungen, insbesondere in der Fernsehtechnik, bei der gleich mehrere Bilder auf einem Bildschirm dargestellt werden. Systeme, bei denen in ein Hauptbild ein kleineres Bild eingeblendet wird, sind unter der Bezeichnung Bild-in-Bild (picture in picture)-Systeme bekannt. Hauptbild und eingeblendetes Bild werden dabei üblicherweise auf verschiedenen Kanälen übertragen oder stammen von verschiedenen Videoquellen.

Um das eingeblendete Bild vom Hauptbild optisch abzuheben, versieht man das eingeblendete Bild mit einem Rahmen. Dieser Rahmen ist beispielsweise mehrere Pixel breit und umläuft den Rand des eingeblendeten Bildes.

Einblendungen von kleineren Bildern finden auch senderseitig bei den Sendeanstalten Anwendung. Beispielsweise werden Interview-Partner, die sich außerhalb des Sendestudios befinden, häufig in einem eigenen Fenster innerhalb des im Studio mit dem Moderator aufgenommenen Bildes dargestellt. Der Übergang von dem Fenster zu dem eigentlichen Bild erfolgt dabei in der Regel nicht nahtlos. Eine meist schwarze Umrandung sorgt dafür, dass sich das Fenster vom eigentlichen Bild abhebt.

Sowohl bei den eingeblendeten Bildern als auch bei den beschriebenen Fenstern wird die durch den Rahmen erwünschte Unterscheidungskraft nicht immer erreicht. Insbesondere bei sehr dunklen Hauptbildern, sehr kleinem oder sehr großen eingeblendeten Bildern oder Fenstern fällt es einem Betrachter schwer, das Hauptbild auf Anhieb von dem eingeblendeten Bild oder dem Fenster zu unterscheiden.

Die US 4,238,773 beschreibt einen Fernsehempfänger der aus einem, Synchronisationssignal eines Fernsehsignals ein Rahmensignal für die Einrahmung eines Bildabschnittes erzeugt, wobei das Rahmensignal dem Luminanzsignal und/oder dem Chrominanzsignal überlagert wird, um den Rahmen darzustellen.

Die US 5,590,267 beschreibt ein Verfahren zur Erzeugung eines Rahmens in einem Videobild, wobei bei einer Ausführungsform vorgesehen ist, einen Grundrahmen mit einer ersten Intensität zu erzeugen und zur Erzeugung eines Tiefeneffekts einen ersten Rahmenabschnitt innerhalb des Grundrahmens und einen zweiten Rahmenabschnitt außerhalb des Grundrahmens darzustellen.

Aufgabe der vorliegenden Erfindung ist es, eine Vorrichtung und ein Verfahren zur Erzeugung eines plastisch wirkenden Rahmens zur Verfügung zu stellen.

Diese Aufgabe wird gelöst durch eine Vorrichtung nach Anspruch 1 und ein Verfahren nach Anspruch 4.

Die Erfindung sieht vor, einen einfachen, ebenen Rahmen, wie er bislang verwendet wird, so zu erweitern, dass der Eindruck eines plastischen Rahmens entsteht. Dies wird durch Schattierungen, die im folgenden als Unterrahmen bezeichnet werden, innerhalb und außerhalb des einfachen Rahmens erreicht. Durch die räumliche Wirkung des plastischen Rahmens wird die Unterscheidungskraft gegenüber einem einfachen, ebenen Rahmen erheblich gesteigert. Ein Betrachter eines Bildes mit diesem plastischen Rahmen nimmt nicht nur den Farbunterschied des Rahmens zum Hauptbild bzw. zu dem eingeblendeten Bild wahr, sondern auch den Unterschied durch den Eindruck der räumlichen Tiefe des Rahmens.

Gemäß einem Ausführungsbeispiel, bei dem das Signal zur Bildung des Rahmens einen Luminanz- und einen Chrominanzanteil aufweist, werden unterschiedliche Schattierungen aus dem Signal für den Rahmen durch Veränderungen des Luminanzanteils erreicht. Die Farbe der Schattierungen muss nicht zusätzlich vorgegeben werden. Vielmehr ergibt sie sich aus der Farbe des Signals für den einfachen Rahmen. Herkömmliche Verfahren zur Erzeugung einfacher, ebener Rahmen lassen sich zu dem erfindungsgemäßen Verfahren einfach erweitern, da auf das herkömmliche Signal zur Erzeugung des einfachen Rahmens zurückgegriffen wird.

Das erfindungsgemäße Verfahren erlaubt es zudem, zwischen dem herkömmlichen einfachen Rahmen und dem erfindungsgemäßen plastischen Rahmen umzuschalten.

Eine erfindungsgemäße Vorrichtung zur Erzeugung eines plastischen Rahmens gemäß einem Ausführungsbeispiel benutzt Elemente, wie sie auch bei einer Vorrichtung zur Erzeugung eines einfachen Rahmens verwendet werden. Das heißt, herkömmliche Vorrichtungen können durch Erweiterung zu erfindungsgemäßen Vorrichtungen ausgebaut werden. Die Verwendung bereits vorhandener oder bekannter Elemente vereinfacht die Entwicklung und Realisierung einer erfindungsgemäßen Vorrichtung erheblich.

Weiterhin vorteilhaft ist, dass die erfindungsgemäße Vorrichtung zwischen der Erzeugung eines einfachen, ebenen Rahmens und eines plastischen Rahmens umschaltbar ist.

Vorteilhafte Aus- und Weiterbildungen sind in Unteransprüchen gekennzeichnet.

Die Erfindung wird nachfolgend anhand der beigefügten Figuren näher erläutert. Es zeigen:
Figur 1 ein Beispiel für einen mit dem erfindungsgemäßen Verfahren gewonnenen Rahmen, wie er auch mit einer erfindungsgemäßen Vorrichtung erzeugbar ist und
Figur 2 ein System zur Erzeugung eines Rahmens um ein matrixförmig aufgebautes Videobild als Beispiel für eine erfindungsgemäße Vorrichtung.

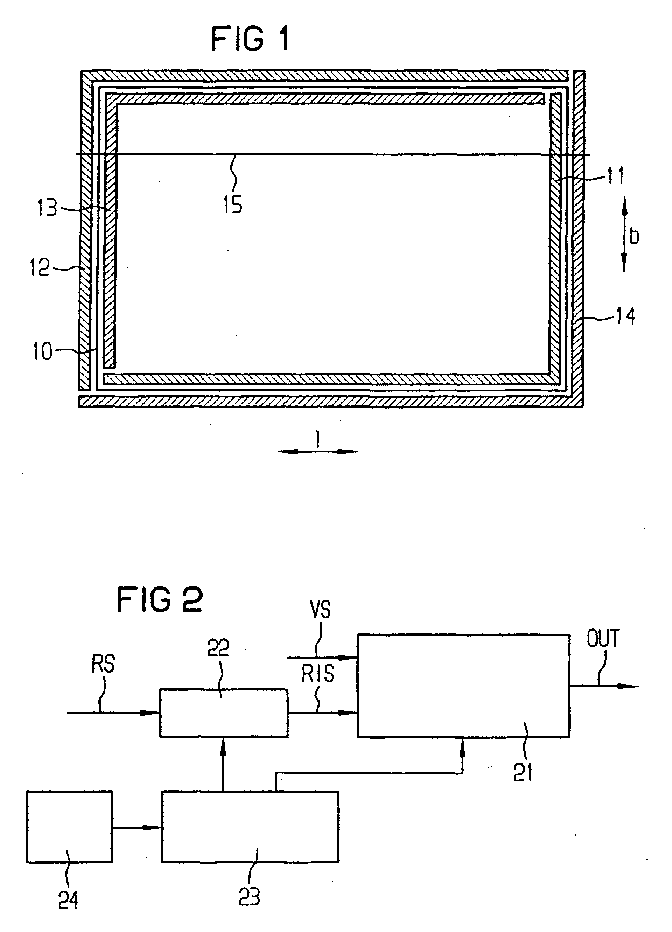

In Figur 1 ist ein Beispiel für einen Rahmen dargestellt, wie er nach dem erfindungsgemäßen Verfahren erzeugt werden kann bzw. mit einer erfindungsmäßen Vorrichtung erzeugbar ist. Er weist einen Grundrahmen 10 mit rechteckiger Geometrie auf. Der Grundrahmen 10 entspricht einem herkömmlichen, ebenen Rahmen. Bei zu umrahmenden Bildern mit bildpunktförmigem Aufbau ist de Grundrahmen 10 einige Bildpunkte breit. An die innere Längsseite und die innere Breitseite des Grundrahmens 10 schließt sich ein erster Innenteilrahmen 11 mit L-förmiger Form an. Die äußeren geometrischen Abmessungen des ersten Innteilrahmens 11 entsprechen den inneren geometrischen Abmessungen des Grundrahmens 10, d. h. die Länge der Innenseite des Grundrahmens 10 ist identisch mit der äußeren Länge des ersten Innenteilrahmens 11. Ebenso verhält es sich mit der jeweiligen Breite. An die verbleibenden beiden Innenseiten des Grundrahmens 10 schließt sich ein zweiter Innenteilrahmen 13 an, so dass der erste Innenteilrahmen 11 und der zweite Innenteilrahmen 13 ein Rechteck bilden. Die Breite des zweiten Innenteilrahmens 13 ist um die Dicke der Längsseite des ersten Innenteilrahmens kleiner als die Breite des ersten Innenteilrahmens. Ebenso ist die Länge des zweiten Innenteilrahmens um die Dicke der Breitseite des ersten Innenteilrahmens 11 kleiner als die Länge des ersten Innenteilrahmens 11.

An den Seiten des Grundrahmens 10, an denen sich der zweite Innenteilrahmen 13 befindet, schließt sich auf der Außenseite der erste Außenteilrahmen 12 an. Die Länge des ersten Außenteilrahmens 12 ist um die Dicke der Breitseite des ersten Außenteilrahmens 12 größer als die Länge des Grundrahmens 10. Ebenso ist die Breite des ersten Außenteilrahmens 12 um die Dicke der Längsseite des ersten Außenteilrahmens 12 größer als die Breite des Grundrahmens 10. An die verbleibenden Seiten des Grundrahmens 10 schließt sich außerhalb des Grundrahmens 10 ein zweiter Außenteilrahmen 14 an. Der erste Außenteilrahmen 12 und der zweite Außenteilrahmen 14 bilden zusammen ein geschlossenes Rechteck, das im folgenden als zweiter Unterrahmen 12, 14 bezeichnet wird. Die Intensitäten vom Grundrahmen 10, erstem Unterrahmen 11, 12 und zweitem Unterrahmen 13, 14 sind jeweils verschieden. Dadurch wird dem Betrachter des Rahmens der Eindruck vermittelt, der Rahmen würde eine Tiefe besitzen, wäre also plastisch.

Im folgenden wird nun beschrieben, wie mit dem erfindungsgemäßen Verfahren ein Rahmen beispielsweise nach der Figur 1 erzeugt werden kann. Der Grundrahmen 10 wird zunächst wie en herkömmlicher, ebener Rahmen aus einem Rahmensignal RS erzeugt. Das Rahmensignal RS kann ein Farbsignal FS mit einem Luminanzanteil LU und einem Chrominanzanteil CH sein. Der Grundrahmen 10 weist eine erste Intensität auf. Um ihn wird nun der erste Unternahmen 11, 12 gelegt. Der erste Unterrahmen 11, 12 wird dabei ebenfalls aus dem Rahmensignal RS erzeugt, allerdings wird das Rahmensignal RS so verändert, dass der erste Unterrahmen 11, 12 eine andere Intensität aufweist als der Grundrahmen 10. Vorzugsweise wird der erste Unterrahmen 11, 12 bezüglich des Grundrahmens 10 versetzt angeordnet. Beispielsweise kann ausgehend vom Grundrahmen 10 der erste Unterrahmen 11, 12 um seine Dicke diagonal nach links oben versetzt werden, wie es zu der Figur 1 beschrieben ist.

Eine noch stärkere Tiefenwirkung des Rahmens wird erzielt, wenn zusätzlich zum ersten Unterrahmen 11, 12 ein zweiter Unterrahmen 13, 14 vorgesehen wird. Der zweite Unterrahmen 13, 14 wird ebenfalls aus dem Rahmensignal RS gewonnen, wobei sich die Intensität des zweiten Unterrahmens 13, 14 vorzugsweise von der Intensität des Grundrahmens 10 und von der Intensität des ersten Unterrahmens 11, 12 unterscheidet. Auch der zweite Unterrahmen 13, 14 wird bezüglich des Grundrahmens 10 versetzt angeordnet. Beispielsweise wird er ausgehend vom Grundrahmen 10 diagonal nach rechts unten verschoben, wie es in Figur 1 dargestellt ist.

Die beste plastische Wirkung erhält man, wenn der Grundrahmen 10 dominiert, d. h., wenn der Grundrahmen 10 bei Überschneidungen mit dem ersten bzw. zweiten Unterrahmen 11, 12 bzw. 13, 14 nicht unterbrochen wird. In der Figur 1 ist ersichtlich, an welchen Stellen der Grundrahmen 10 bei Überschneidungen mit dem ersten Unterrahmen 11, 12 bzw. dem zweiten Unterrahmen 13, 14 die Letztgenannten unterbricht.

Wird für das Rahmensignal RS das Farbsignal FS verwendet, lässt sich die Intensität des Grundrahmens 10 und der Unterrahmen 11, 12 und 13, 14 allein durch Veränderung des Luminanzanteils LU steuern. Der Chrominanzanteil CH kann jeweils derselbe sein.

Der Aufbau des Rahmens ist im folgenden anhand einer aus dem Rahmen herausgegriffenen Zeile 15 beschrieben.
Zunächst wird von dem Rahmen der zu der Zeile 15 gehörende Teil des ersten Außenteilrahmens 12 mit einer bestimmten Intensität erzeugt. Daran schließt sich ein erster Teil des Grundrahmens 10 an. Die Zeile wird fortgesetzt mit dem zu der Zeile 15 gehörenden Teil des zweiten Innenteilrahmens 13. Im weiteren Verlauf der Zeile kann nun der zu der Zeile 15 gehörende Teil des einzurahmenden Bildes vorgesehen sein. Der Rahmen in dieser Zeile wird geschlossen mit dem zur Zeile 15 gehörenden Teil des ersten Innenteilrahmens 11, dem zur Zeile 15 gehörenden zweiten Teil des Grundrahmens 10 und dem zur Zeile 15 gehörenden Teil des zweiten Außenteilrahmens 14. Der Grundrahmen 10 und der zweite Innenteilrahmen 13 jeweils der Zeile 15 weisen jeweils unterschiedliche Intensität auf. Diese unterscheiden sich von der Intensität des ersten Außenteilrahmens 12.
Die Erzeugung der weiteren Zeilen verläuft analog.

Figur 2 zeigt ein Ausführungsbeispiel für eine Vorrichtung zur Erzeugung eines Rahmens um ein matrixförmig aufgebautes Videobild. Mit der Vorrichtung sind Rahmen um Videobilder, die aus Bildpunkten zusammengesetzt sind, nach dem erfindungsgemäßen Verfahren erzeugbar.

Gemäß Figur 2 enthält die erfindungsgemäße Vorrichtung eine Einblendungsschaltung 21, die aus einem Signal VS des Videobildes und einem Rahmenintensitätssignal RIS ein Ausgangssignal OUT erzeugt.
Eine Intensitätssteuerschaltung 22 erzeugt aus dem Rahmensignal RS durch Steuerung des Signals oder der Signale, die für die Intensität eines vom Rahmensignal erzeugten Rahmens bestimmend sind, das Rahmenintensitätssignal RIS. In einem bevorzugten Ausführungsbeispiel ist das Rahmensignal RS das Farbsignal FS. Mit der Intensitätssteuerschaltung 22 ist der Luminanzanteil LU des Farbsignals FS und damit die Intensität eines zu erzeugenden Rahmens steuerbar.

Die Einblendungsschaltung 21 und die Intensitätssteuerschaltung 22 sind jeweils mit einem Ausgang einer Vergleichsschaltung 23 verbunden. Die Vergleichsschaltung 23 vergleicht die Zählerstände eines Zählers 24 mit vorgebbaren Werten. Der Zähler 24 zählt dabei zeilen- und spaltenweise, so dass jedem Zählerstand ein bestimmter Bildpunkt des aus Bildpunkten aufgebauten Videobildes zuordenbar ist. Die vorgebbaren Werte, die die Vergleichsschaltung 23 fortlaufend mit dem Zählerstand des Zählers 24 vergleicht, entsprechen den Koordinaten des Grundrahmens 10 und der Unterrahmen 11, 12 und 13, 14. Jeder Koordinate, die zu dem Grundrahmen oder dem ersten oder zweiten Unterrahmen gehört, ist ein Intensitätswert zugeordnet. Durch diese Zuordnung wird erreicht, dass die Intensitätssteuerschaltung 22 für den Grundrahmen 10 ein Rahmenintensitätssignal RIS mit einer ersten Intensität, für den ersten Unterrahmen 11, 12 mit einer zweiten Intensität und für den zweiten Unterrahmen 13, 14 mit einer dritten Intensität erzeugt. Weiterhin sorgt die Vergleichsschaltuung 23 dafür, dass nur bei den Koordinaten, denen ein Rahmen zugeordnet ist, die Einblendungsschaltung 21 das Rahmenintensitätssignal RIS als Ausgangssignal OUT liefert. Bei den übrigen Koordinaten enthält das Ausgangssignal OUT die Signale VS des Videobildes.

In einer weiteren bevorzugten Ausführungsform ist die Intensitätssteuerschaltung 22 abschaltbar. Ist die Intensitätssteuerschaltung 22 abgeschaltet, wird das Rahmensignal RS unverändert an die Einblendungsschaltung 21 weitergeleitet. In diesem Fall ist das Rahmensignal RS mit dem Rahmenintensitätssignal RIS identisch. Diese Ausführungsform erlaubt ein Umschalten zwischen einem herkömmlichen, ebenen Rahmen und einem plastisch wirkenden Rahmen.

Es sei darauf hingewiesen, dass im Rahmen dieser Erfindung unter dem Begriff Videobild nicht nur Bilder von Fernsehgeräten, Videorecordern oder anderen Videoquellen zu verstehen sind, sondern auch Bilder, die mit projizierenden Verfahren, insbesondere cineastischen Verfahren gewonnen werden.

Der Einsatz des erfindungsgemäßen Verfahrens ist auch bei Bildern im Breitbandformat denkbar, die auf eine Anzeigefläche, wie etwa einem herkömmlichen Fernsehbildschirm mit Kanten-Längen-Verhältnis 4/3 angezeigt werden.

## Patentansprüche

1. Vorrichtung zur Erzeugung eines Rahmens um ein matrixförmig aufgebautes Videobild mit
- einem Zähler (24) zum Zählen von Zeilen und Spalten des Videobildes,
- einer Einblendungsschaltung (21), die aus einem Signal des Videobildes und einem Rahmenintensitätssignal (RIS) ein Ausgangssignal (OUT) erzeugt und die derart steuerbar ist, dass bei bestimmten, vorgebbaren Werten für die Zählerstände das Rahmenintensitätssignal (RIS) im Ausgangssignal (OUT) enthalten ist und
- einer Intensitätssteuerschaltung (22), die das Rahmenintensitätssignal (RIS) bereitstellt und mit der die Intensität des Rahmens über das Rahmenintensitätssignal (RIS) in Abhängigkeit vom Zählerstand des Zählers (24) steuerbar ist.

2. Vorrichtung nach Anspruch 1,
**dadurch gekennzeichnet, dass**
das Rahmenintensitätssignal (RIS) einen Chrominanzanteil (CH) und einen Luminanzanteil (LU) aufweist und die Intensitätssteuerschaltung (22) Mittel zur Steuerung des Luminanzanteils (LU) des Rahmenintensitätssignals (RIS) einschließt.

3. Vorrichtung nach einem der Ansprüche 1 oder 2,
**dadurch gekennzeichnet, dass**
die Intensitätssteuerschaltung (22) zu- und abschaltbar ist.

4. Verfahren zur Erzeugung eines Rahmens um ein matrixförmig aufgebautes Videobild, das folgende Verfahrensschritte umfasst:
- Bereitstellen eines Zählers (24) zum Zählen von Zeilen und Spalten des Videobildes,
- Erzeugen eines Ausgangssignals (OUT) aus einem Signal des Videobildes und einem Rahmenintensitätssignals (RIS) derart, dass bei bestimmten vorgebbaren Zählerständen das Rahmenintensitätssignal (RIS) im Ausgangssignal (OUT) enthalten ist,
- Steuern der Intensität des Rahmens über das Rahmenintensitätssignal (RIS) in Abhängigkeit vom Zählerstand des Zählers (24).

5. Verfahren nach Anspruch 4,
**dadurch gekennzeichnet, dass**
das Rahmenintensitätssignal (RIS) einen Chrominanzanteil (CH) und einen Luminanzanteil (LU) aufweist und dass der Luminanzanteil (LU) des Rahmenintensitätssignals (RIS) gesteuert wird.

## Claims

1. A device for generating a border around a video image of matrix-type structure, having
- a counter (24) for counting rows and columns of the video image,
- an overlay circuit (21), which generates an output signal (OUT) from a video image signal and a border intensity signal (RIS) and may be controlled in such a way that, for particular, predeterminable values of the counter readings, the border intensity signal (RIS) is contained in the output signal (OUT) and
- an intensity control circuit (22), which provides the border intensity signal (RIS) and with which the intensity of the border may be controlled via the border intensity signal (RIS) as a function of the reading of the counter (24).

2. A device according to claim 1,
**characterised in that**
the border intensity signal (RIS) comprises a chrominance portion (CH) and a luminance portion (LU) and the intensity control circuit (22) includes means for controlling the luminance portion (LU) of the border intensity signal (RIS).

3. A device according to one of claims 1 or 2,
**characterised in that**
the intensity control circuit (22) may be switched on and off.

4. A method of generating a border around a video image of matrix-type structure, which comprises the following method steps:
- provision of a counter (24) for counting rows and columns of the video image,
- generation of an output signal (OUT) from a video image signal and a border intensity signal (RIS) in such a way that, for particular predeterminable counter readings, the border intensity signal (RIS) is contained in the output signal (OUT),
- controlling the intensity of the border via the border intensity signal (RIS) as a function of the reading of the counter (24).

5. A method according to claim 4,
**characterised in that**
the border intensity signal (RIS) comprises a chrominance portion (CH) and a luminance portion (LU) and **in that** luminance portion (LU) of the border intensity signal (RIS) is controlled.

## Revendications

1. Dispositif pour la production d'un cadre autour d'une image vidéo se présentant sous forme de matrice, comprenant
- un compteur (24) permettant de calculer le nombre de lignes et de colonnes de l'image vidéo,
- un circuit de fondu (21) permettant d'émettre un signal de sortie (OUT) à partir d'un signal de l'image vidéo et d'un signal d'intensité de cadre (RIS) et pouvant être contrôlé de telle sorte que, pour des valeurs précises préalablement définies concernant les niveaux du compteur, le signal d'intensité de cadre (RIS) est contenu dans le signal de sortie (OUT), et
- un circuit de contrôle de l'intensité (22) qui émet le signal d'intensité de cadre (RIS) et grâce auquel l'intensité du cadre sur le signal d'intensité de cadre (RIS) peut être contrôlée en fonction du niveau du compteur (24).

2. Dispositif selon la revendication 1,
**caractérisé en ce que**
le signal d'intensité de cadre (RIS) présente une proportion de chrominance (CH) et une proportion de luminance (LU), et le circuit de contrôle de l'intensité (22) comprend un moyen permettant de contrôler la proportion de luminance (LU) du signal d'intensité de cadre (RIS).

3. Dispositif selon la revendication 1 ou 2,
**caractérisé en ce que**
le circuit de contrôle de l'intensité (22) peut être activé ou désactivé.

4. Procédé pour la production d'un cadre autour d'une image vidéo se présentant sous forme de matrice
comprenant les étapes de procédé suivantes :
- préparation d'un un compteur (24) permettant de calculer le nombre de lignes et de colonnes de l'image vidéo,
- émission d'un signal de sortie (OUT) à partir d'un signal de l'image vidéo et d'un signal d'intensité de cadre (RIS) de telle sorte que, pour des niveaux de compteur précis préalablement définis, le signal d'intensité de cadre (RIS) est contenu dans le signal de sortie (OUT),
- contrôle de l'intensité du cadre via le signal d'intensité de cadre (RIS) en fonction du niveau du compteur (24).

5. Procédé selon la revendication 4,
**caractérisé en ce que**
le signal d'intensité de cadre (RIS) présente une proportion de chrominance (CH) et une proportion de luminance (LU), et la proportion de luminance (LU) du signal d'intensité de cadre (RIS) est contrôlée.
